# EUROPEAN PATENT APPLICATION

(11) **EP 1 832 379 A2**
(43) Date of publication of application: **12.09.2007**
(21) Application number: 07380058.3
(22) Date of filing: 05.03.2007
(51) Int. Cl.: B23K 26/08

(54) **Equipment for marking by laser beam**

(30) Priority: 10.03.2006 ES 200600610
(71) Applicant: Macsa ID, S.A., 08240 Manresa (ES)
(72) Inventor: Camps Claramunt, Joan, 08240 Manresa (Barcelona) (ES); Vogler, Sven, 08240 Manresa (Barcelona) (ES)
(74) Representative: Durán Moya, Carlos

(57) **Abstract**

The equipment is characterised in that the laser beam generator is formed by a casing unit produced in extruded light alloy profiles and the emerging bundle is directed towards a set of two mirrors at 45° arranged successively, designed to lower the bundle before it enters the head carrying the mirrors controlled by galvanometric motors, allowing the focal lens to be arranged on the same plane as the base of the laser beam generating tube, increasing the distance between the base of the equipment and the object to be marked.

## Description

The present invention relates to equipment for marking by laser beams that provides substantial novelty and inventive step.

Equipment for marking by laser beams is used widely in industry for marking by the action of a bundle of laser beams on the surface of the object to be marked, which may be of varied nature.

In many cases, objects are marked while they are moving on a production line, for example, a packing or other type of line.

In the currently known equipment the bundle of laser beams enters directly or through a mirror at 45° to the head, which has two mirrors at 90° actuated by galvanometric motors designated respectively by the letters X, Y indicative of a planar coordinates system. A lens for focusing the bundle of laser beams to the plane of the marking is situated at a short distance and focuses the bundle so that it can carry out the marking at points that vary according to the operation of galvanometric motors, producing marking following the required graphic or letter motif on the object.

Marking equipment is in many cases provided with means to facilitate the possible change of marking between 0° and 90° by means of a mirror at 45° to the head which receives the laser bundle from the laser generating equipment. The reflected bundle is always in a single plane, which is at the same level as the outlet of the laser tube.

For marking at 90° the working distance, in other words, the distance between the laser equipment base and the object to be marked, is the focal distance of the lens less the separation between the lens and the base of the laser. This reduction may be some 30 mm, and therefore when working with a lens with a focal distance of 80-90 mm, the working distance is reduced to some 50-60 mm. In many cases, this excessively small distance between the base of the laser equipment and the object to be marked poses problems that are very difficult to solve in the marking equipment, as it is impossible in some cases to integrate the system in a production line, for mechanical reasons.

To solve this problem, the inventors have carried out tests and experiments, which have led them to produce the present invention.

Basically, the present invention comprises the arrangement in the equipment for marking by laser beams of a system of two mirrors at 45° forming a sort of periscope with which the laser bundle coming from the generating unit thereof or laser tube can be lowered to a plane situated very close to the base of said unit or laser tube. The head and lens unit can therefore be situated very close to the base of said laser tube until the lens is on the same plane as the base of the laser tube, giving the maximum working distance, since it can be the same as the focal distance of the lens.

This arrangement allows optical adjustment to be carried out very easily, reducing the adjustment time and making said adjustment much more precise, maintaining the 90° of the periscope. In fact, the two mirrors of the periscope can be inclined along the two axes X/Y. Adjustment of the inclination at 90° causes the bundle entering the periscope at 90° to also leave at 90° on a plane parallel to the plane of the entering bundle. Once the inclination of the two mirrors has been adjusted they can be fixed mechanically avoiding any inclination and permitting only vertical movement of the two mirrors. Any vertical movement of the first mirror of the periscope will be transformed into a horizontal movement (with no inclination) and any vertical movement of the second mirror will be transformed into a vertical movement (with no inclination) of the bundle leaving the periscope in the direction of the block of scanners.

By means of the present improvements the system can be used for different head sizes without detriment to the working distance since the focal lens is maintained in the same position and optical adjustment for different head sizes is based simply on raising or lowering the second mirror of the periscope (with no inclination of the bundle), which is easy to perform even by staff with no experience of adjusting the optics of laser equipment.

Moreover, the equipment for marking by laser beams to which the present invention relates also introduces substantial improvements to the construction of the equipment casing since said casing, as well as protecting the elements of the laser equipment, must also provide means for suitable fixing thereof, which results in considerable mechanisation and assembly costs.

According to the present invention, the casing comprises a base part and a cover part, fitted together, produced from a light alloy, in particular extruded aluminium, in such a way that the base, which is planar, is particularly appropriate as an optical table, having a series of guides to locate and fix the different optical elements such as the laser, the 45° mirrors, the scanner block, lens, etc., with complete mechanical assurance that it is planar and perpendicular allowing very easy assembly and changes. At the same time, the structure of extruded profiles allows the heat inside the equipment to be dissipated very easily since the parts forming the casing body of the equipment have appropriately sized and located fins to allow heat to be eliminated, to which the use of aluminium as the material forming said casing body also contributes, since it provides a very high heat transmission coefficient. Thus, it is possible to reduce the operating temperature of the equipment substantially and at the same time reduce manufacturing and assembly costs, which is achieved with very much higher technical characteristics compared with casing bodies of machined aluminium and stainless steel for the cover.

For a better understanding, the accompanying drawings illustrating preferred embodiments of the present invention are given as an explanatory but not limiting example.
Fig. 1 shows laser beam generating equipment incorporating some of the improvements of the present invention.
Fig. 2 shows a view in front elevation of the equipment of Fig. 1.
Fig. 3 shows another example of an embodiment.

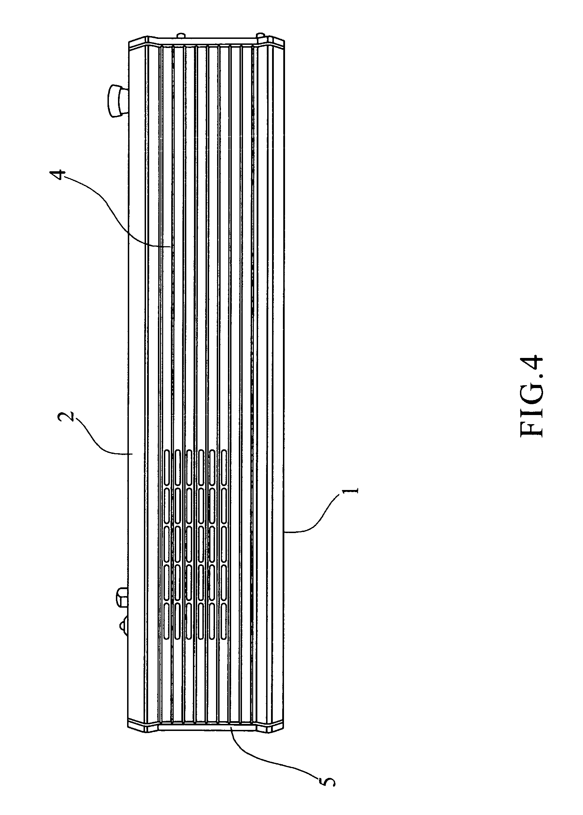

Fig. 4 shows a view in side elevation of the equipment of Figs. 1 and 2.

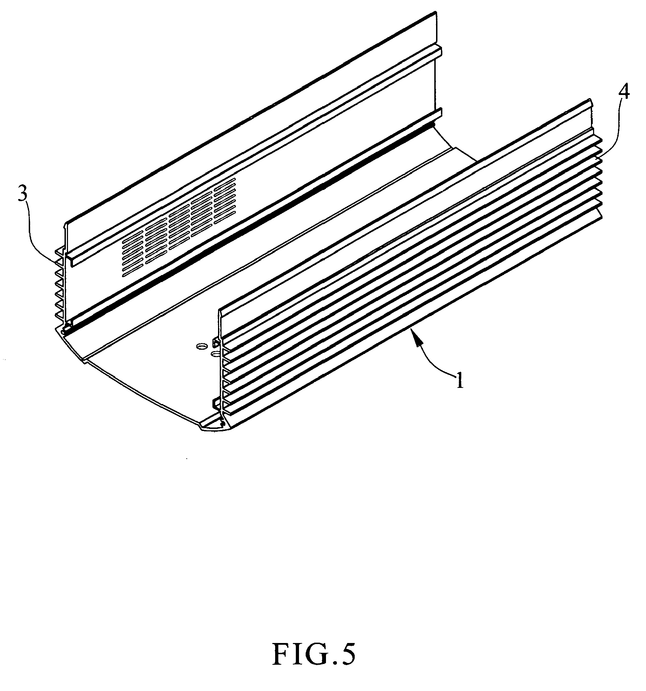

Fig. 5 shows a perspective view of the equipment cover.
Fig. 6 shows a view in transversal section of the equipment cover.
Fig. 7 shows a variant of the equipment base.
Fig. 8 shows a diagrammatic perspective view of part of the present invention.
Fig. 9 shows a view in front elevation and partial cross-section of marking equipment according to the present invention.
Fig. 10 shows a detail in cross-section.

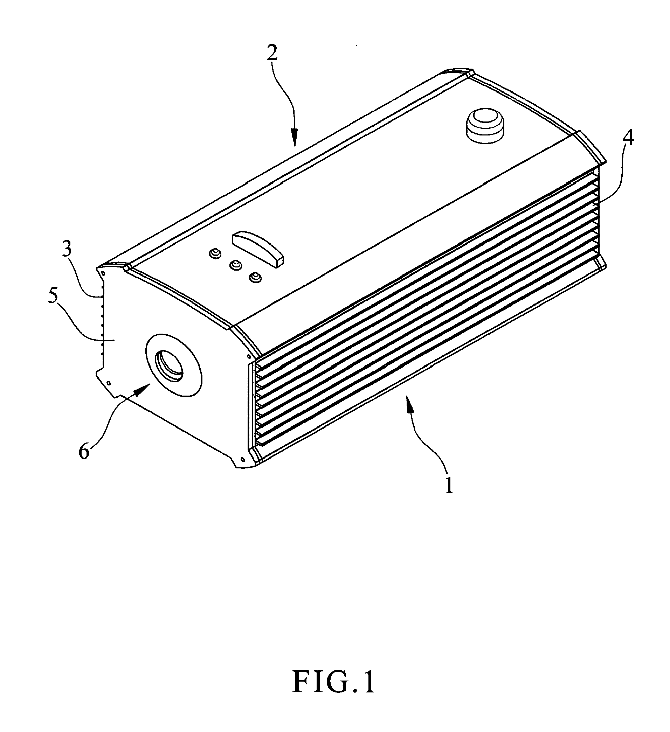

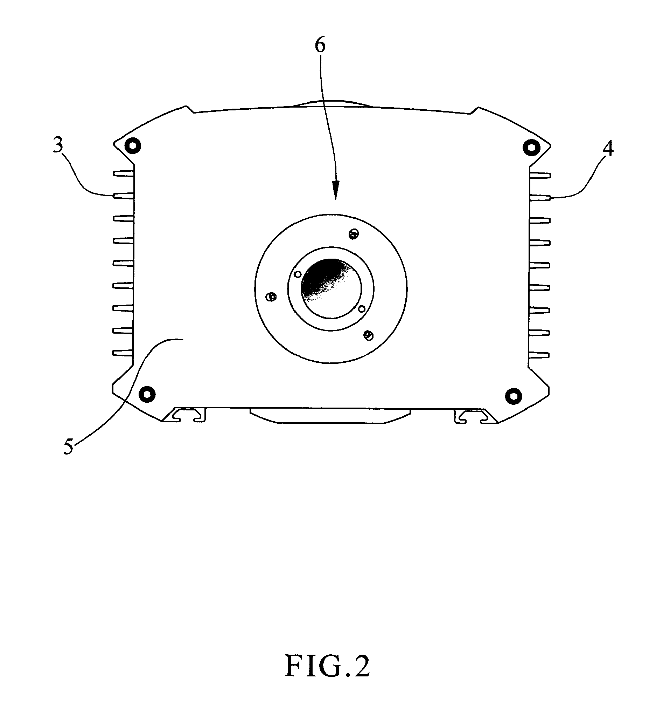

As can be seen in Fig. 1, the present invention can be applied to laser beam equipment of which the laser beam generating unit comprises a casing body formed by a base -1- with a planar lower portion and a cap or cover -2-, fitted together, produced from extruded aluminium, which will allow cooling fins to be produced on said parts as indicated by the numerals -3- and -4-. End covers, such as the cover -5- shown in Figs. 1 and 2, allow closure of the equipment generating the bundle of laser beams that emerge outwards through the front opening -6-.

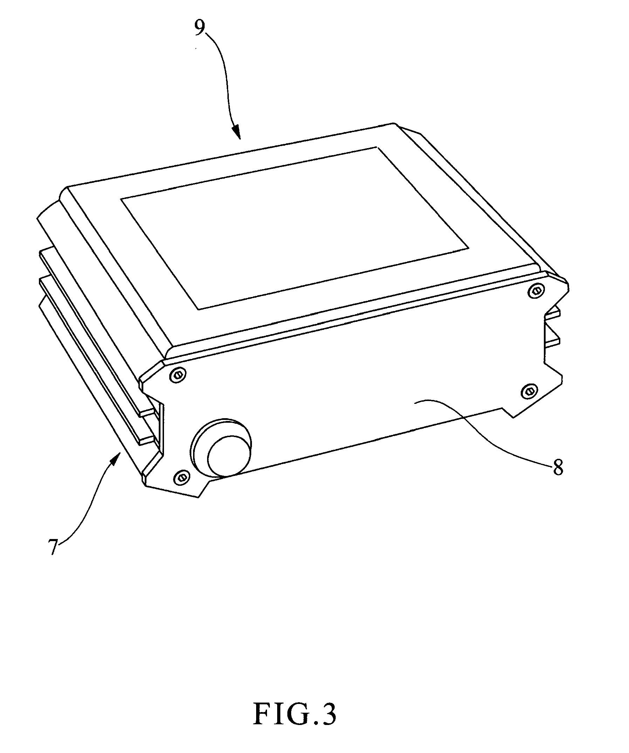

Fig. 3 shows a variant of the equipment which has a base -7- also of extruded aluminium, with side fins, closing end covers of which the front cover -8- and upper frame -9- have been illustrated.

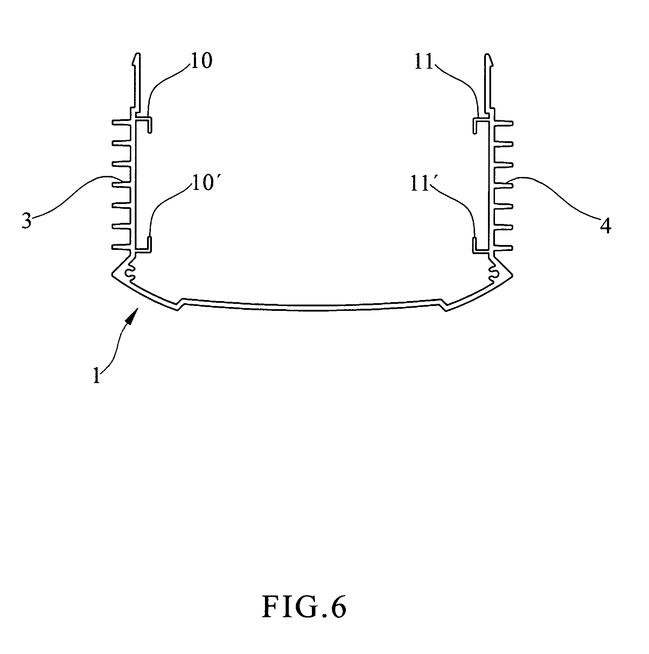

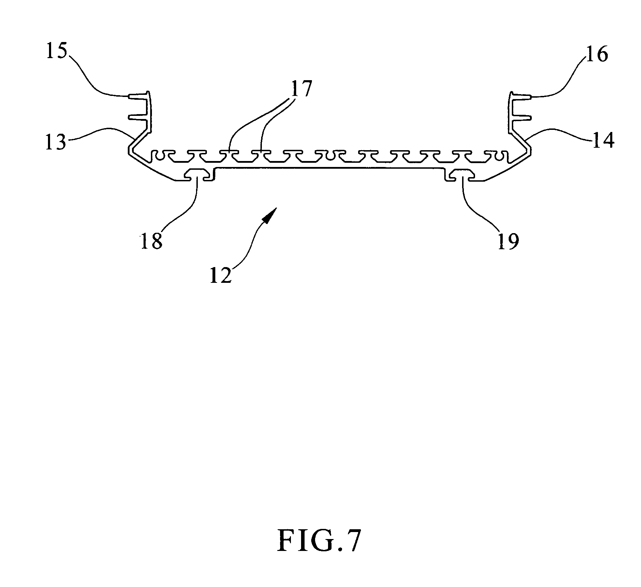

As can be seen in Fig. 6, production of the cover -1- in the form of an extruded aluminium part allows the fins -3- and -4- to be produced very easily and similarly other internal accessories such as the internal profiles -10-, -10'- on one of the sides and -11-, -11'- on the other side, for example. Said profiles must be considered capable of having very different configurations depending on the required objective. Thus, for example, in the variant in Fig. 7 the base -12- has side walls -13- and -14- with their fins -15- and -16-, and the base is also planar, having multiple ribs -17- which form longitudinal guides for assembling and arranging the elements making up the equipment for generating the bundle of laser beams. Grooves similar to those indicated by the numerals -18- and -19- can also be produced on the lower face.

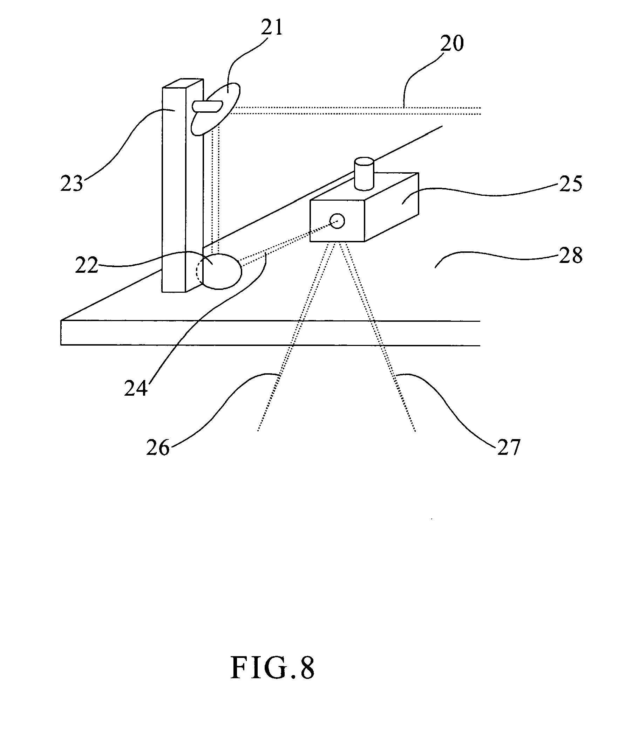

The optical arrangement of the laser beam equipment to which the present invention relates has been illustrated diagrammatically in Fig. 8. Said figure illustrates the bundle of laser beams -20- coming from the laser beam tube and the arrangement of a set of two mirrors -21- and -22- at 45° mounted on the same vertical on a support or supports -23-, with adjustment of the fixed angular position and the capacity for vertical movement. Using this arrangement, the bundle of laser beams -20- then passes by reflection in the two mirrors -21- and -22-, as shown by the bundle designated by the numeral -24-, to the head -25- carrying the mirrors actuated by galvanometric motors, which have not been illustrated in greater detail because they pertain to the state of the art. The emerging bundles, designated by the numerals -26- and -27-, are those that carry out the marking on the object to marked, which has not been illustrated.

With this arrangement it is possible to lower the laser bundle to a level very close to the base of the laser tube, and therefore the focal lens is on the same level as the base -28- of the laser tube, which determines the working distance, in other words, the distance between the base and the object to be marked can become equal to the focal distance of the lens.

The two mirrors -21- and -22- can be inclined along the two axes X, Y, the inclination being adjusted to 90° so that the bundle entering the periscope at 90° also leaves at 90° in a plane parallel to the entering bundle, in such a way that, once the inclination of the two mirrors has been adjusted, they can be mechanically fixed against inclination, allowing only vertical movement of said mirrors.

As will be seen, a vertical movement of the first mirror of the periscope will be transformed into a horizontal movement (with no inclination) and a vertical movement of the second mirror will be transformed into a vertical movement (with no inclination) of the bundle leaving the periscope in the direction of the block of scanners.

Using this arrangement optical adjustment is very easily performed and adjustment times reduced very significantly, and moreover adjustment is much more precise since the 90° angles of the periscope are retained.

Furthermore, it is very easy to use the periscope to use different head sizes since it allows the plane of the laser bundle to be lowered, while maintaining the focal lens in the same position.

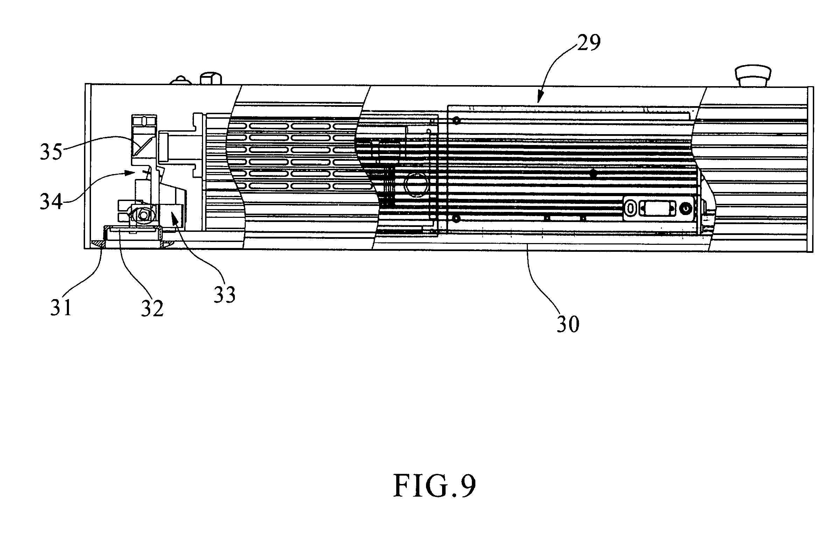

Fig. 9 shows a view in side elevation and partial cross-section of equipment for marking by laser beams incorporating the present invention. In said figure the laser beam generator or laser beam tube can be seen indicated generally by the numeral -29-, connected to a lower base -30- on which is mounted the support -31- of the focal lens -32-, which receives the bundle of laser beams from the head -33- which, in turn, receives it by means of the periscope which is partly visible at -34- in the figure in which the upper mirror -35- can be seen at 45°.

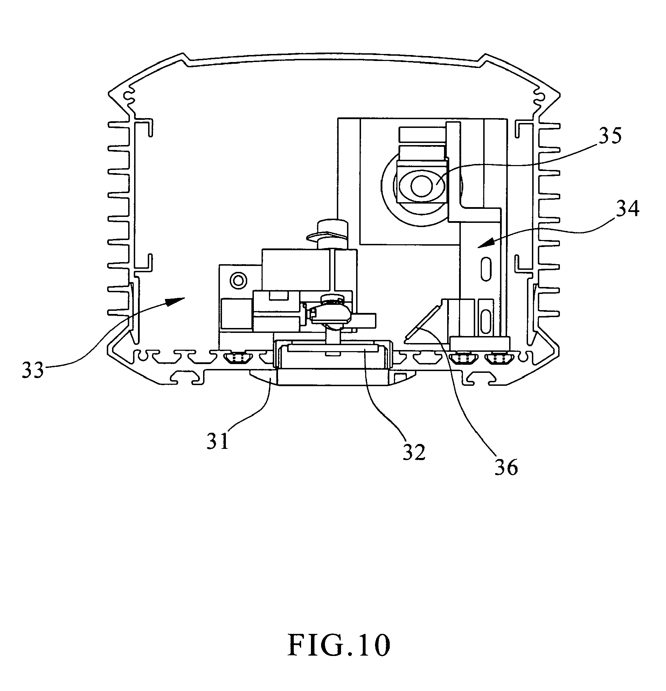

Fig. 10, which illustrates diagrammatically a cross-section of the equipment of Fig. 9, also shows the mirror -36- at 45° situated in the lower part and forming part of the so-called periscope of the equipment designed to introduce the bundle of laser beams into the head -33-.

It will be understood that the invention that has been described and illustrated in preferred embodiments will allow wide variants, which may be introduced by those skilled in the art in view of the information provided, but it must be taken into account that the scope of the present invention is limited only by the attached claims.

## Claims

1. Equipment for marking by laser beams, of the type having a tube generating a bundle of laser beams and a head with galvanometric motors for the mirrors and also a focal lens for sending the beam to the marking points of the object, **characterised in that** the laser beam generator is formed by a casing unit produced from extruded light alloy profiles and the emerging bundle is directed towards a unit of two mirrors at 45° in successive disposition, designed to lower the bundle before it enters the head carrying the mirrors controlled by galvanometric motors, allowing the focal lens to be arranged on the same plane as the base of the laser beam generating tube, increasing the distance between the base of the equipment and the object to be marked.

2. Equipment for marking by laser beams, according to claim 1, **characterised in that** the two mirrors at 45° are arranged in an angularly adjustable manner and can be moved vertically in relation to each other.

3. Equipment for marking by laser beams, according to claim 2, **characterised in that** the mirrors at an angle of 45° can be permanently fixed after their angle has been adjusted.

4. Equipment for marking by laser beams, according to claim 1, **characterised in that** the two mirrors at 45° are arranged on the same vertical.

5. Equipment for marking by laser beam, according to claim 1, **characterised in that** the casing of the laser beam bundle generator is formed by a base provided with fins and internal and external guides for guiding and assembling technical elements and accessories and a cover of similar characteristics that can be fitted to the base and can receive either or both closing end covers.

6. Equipment for marking by laser beams, according to claim 1, **characterised in that** the light alloy is an aluminium alloy.

7. Equipment for marking by laser beam, according to claim 1, **characterised in that** the base has a planar central portion to receive the set of devices of the laser beam generator in the grooves produced therein in when it was extruded.
